# EUROPEAN PATENT SPECIFICATION

(11) **EP 0 603 960 B1**
(45) Date of publication and mention of the grant of the patent: **26.02.1997**
(21) Application number: 93203573.6
(22) Date of filing: 17.12.1993
(51) Int. Cl.: B60R 25/00

(54) **Anti-theft device for motor vehicles, clamping brake and clutch pedals**
Diebstahlschutzvorrichtung für Kraftfahrzeuge zum Blockieren der Brems- und Kupplungspedale
Dispositif anti-vol pour véhicules automobiles bloquant les pédales de frein et d'embrayage

(30) Priority: 23.12.1992 IT MI922933
(43) Date of publication of application: 29.06.1994
(73) Proprietor: I.P. INNOVATIVE PRODUCTS s.r.l., I-48022 Lugo (Ravenna) (IT)
(72) Inventor: Macchini, Mario, I-61100 Pesaro (IT)
(74) Representative: Pederzini, Paolo

(56) References cited:
- FR-A- 2 586 384
- FR-A- 2 625 962

## Description

The present invention relates to an anti-theft device for motor vehicles, capable, in particular, of clamping brake and clutch pedals.

Among the mechanical anti-theft devices for motor vehicles, operating by means of pedals clamping principle, devices exist formed by coupled pliers, that may be closed with a padlock.

With the clamping of the pliers over the levers of the brake and clutch pedals, the movement of the two pedals is prevented and as a consequence it is not possible to operate the motor vehicle's brake and clutch.

The use of these anti-theft devices is somewhat difficult, because laborious and inconvenient manual operations are required both in order to position and close the pliers over the levers of the pedals and to proceed to open them and to remove the anti-burglar device.

French patent FR-A-2586384 describes a mechanical anti-theft device according to the preamble of claim 1 which blocks the brake and clutch pedals and cuts off the electric power to the ignition and distributor.

This anti-theft device includes a tubular supporting bar having two L-shaped shelves fixed symmetrically on the sides, each shelf, by co-operating with the above main supporting bar, encircling on three sides one of the two pedals; this anti-burglar device also includes a pair of retractable shelves pivoted to the main supporting bar and driven outwards by two triangular cams sliding in the above tubular bar.

Said pair of triangular cams is fixed to a control rod sliding in the tubular bar and is operated by the lock fitted to one end of the tubular bar.

The anti-theft device described in French patent FR-A-2586384 is installed stably on the car and must be sized according to the car make in question in that the centre to centre distance between the "L" shaped shelves must vary according to the distance between the brake and clutch pedal.

An object of the invention is a universal anti-theft device whose pedal clamping means is adapted to accept the dimensions and centre to centre distances of the pedals of many different car makes.

A further object of this invention is an anti-theft device whereby the pedal clamping means are not operated by mechanisms including sliding parts that cause friction resistance.

Another object of the invention is an anti-theft device including return springs to keep said pedal clamping means open and a lock to keep said clamping means closed.

Still another object of the invention is an easily manoeuvrable anti-theft device, that can be positioned and removed easily, with a limited number of manual operations.

The abovementioned objects are attained with an anti-theft device for motor vehicles according to the invention, capable of clamping brake and clutch pedals, comprising clamp means capable of engaging with said pedals, a supporting bar holding said clamp means, at least one operating rod operatively connected to said clamp means, mounted movable in said bar so that it may be moved between an unlocked position in which it operates the opening of said clamp means and a locked position in which it operates the closing of said clamp means, elastic return means and lock means being operatively connected to said operating rod, characterised in that said clamp means are calliper means and are capable of holding said rod in said unlocked position and lock means being suitable for clamping said rod with respect to said bar in said locked position, and in that said calliper means are formed by two substantially S-shaped claws hinged one to the other and in said supporting bar, so as to constitute a double callipers, and said operating rod being mounted in said bar slidable between said two positions to determine the opening and the closing of said calliper means.

The use of the anti-theft device according to the invention requires few and easy operations consisting in placing one end of the supporting bar on the motor vehicle's floor between the brake and clutch pedals, in moving the operating rod to the locked position, so as to close the claws of the pliers means over the levers of the two pedals and in operating the lock means as to clamp the rod with respect to the bar.

In order to unclamp the anti-theft device, it is necessary to operate the lock; in this way the operating rod returns to the unlocked position under the action of the elastic means and the calliper means open automatically, moving up against the supporting bar.

The anti-theft device in the non-operational condition has a very limited size and can therefore be kept with ease inside the motor vehicle.

Features and advantages of the invention will now be illustrated with reference to a preferred embodiment represented as a non-limiting example in the enclosed drawings, wherein:
Fig. 1 is perspective view of an anti-theft device according to the invention in non-operational condition;
Fig. 2 is perspective view of an anti-theft device according to the invention in operational condition;
Fig. 3 is a top plan view, partially sectioned and on a reduced scale, of the anti-theft device in the non-operational condition of Fig. 1;
Fig. 4 is a side view, partially sectioned, of the anti-theft device in the condition of Fig. 3 positioned with respect to the floor of the motor vehicle;
Fig. 5 is a cross-sectional view taken along the plane V-V of Fig. 4;
Fig. 6 is a top plan view, partially sectioned, on a reduced scale of the anti-theft device in the operational condition of Fig. 2;
Fig. 7 is a side view, partially sectioned, of the anti-theft device in the condition of Fig. 6 positioned with respect to the floor of the motor vehicle;
Fig. 8 is a cross-sectional view taken along the plane VIII-VIII of Fig. 7.

An anti-theft device according to the invention, used to clamp pedals 2 and 3 of the clutch and of the brake of a motor vehicle, is indicated as a whole in the figures with 1. The pedals 2 and 3 are formed by respective levers 4 and 5 and by plates 5 and 6. The floor of the motor vehicle, visible in Figs. 4 and 7, is indicated with 8.

The anti-theft device 1 comprises calliper means, indicated as a whole with 15 and a supporting bar 10, provided with a cylindrical recess 13, with openings 12, visible in Figs. 4 and 7, with slots 9 and with supporting feet 14.

The calliper means 15 are formed by S-shaped claws 16, provided with knurled surfaces 17, hinged one to the other and to the bar 10 by means of a pivot 18, so as to constitute a double callipers. The pivot 18 is fastened to a wall 19 of the slot 9.

There is indicated with 11 a sleeve mounted slidable on the rod 10 and fastened to a rod 20 in turn mounted slidable inside the recess 13 of the bar 10. Between the sleeve 11 and the bar 10 there is interposed a return spring 21. There are indicated with 23 two levers hinged to the rod 20 by means of a pivot 24 and hanged to the claws 16 by means of pivots 25. The rod 20 is provided with a key-operated lock 22 comprising a stem 30 and a bolt 26 suitable for engaging with an opening 12 of the bar 10, under the action of a spring 27. The lock 22 may be operated with a key 28.

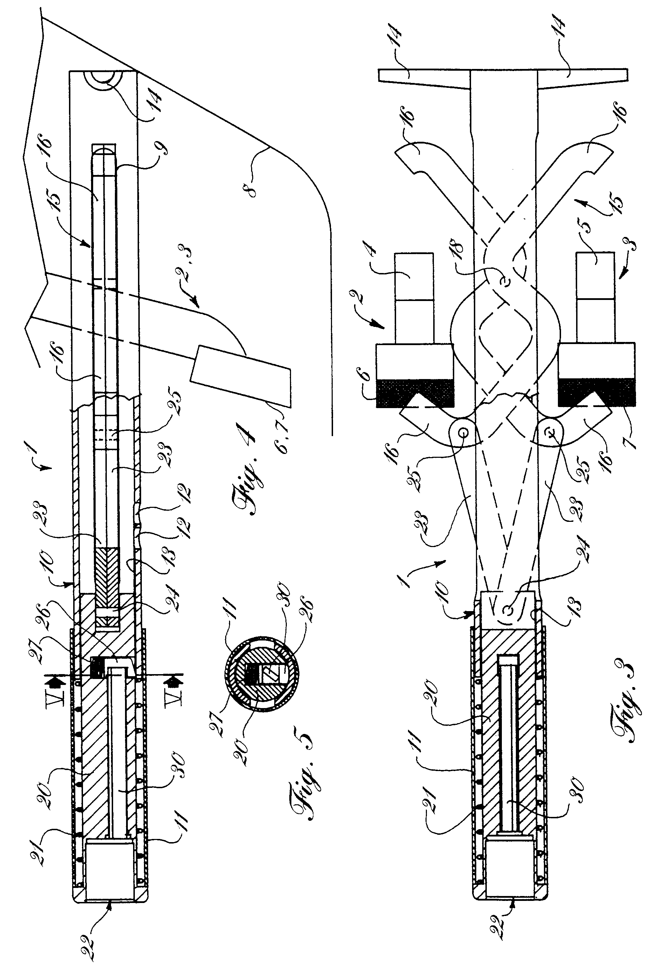

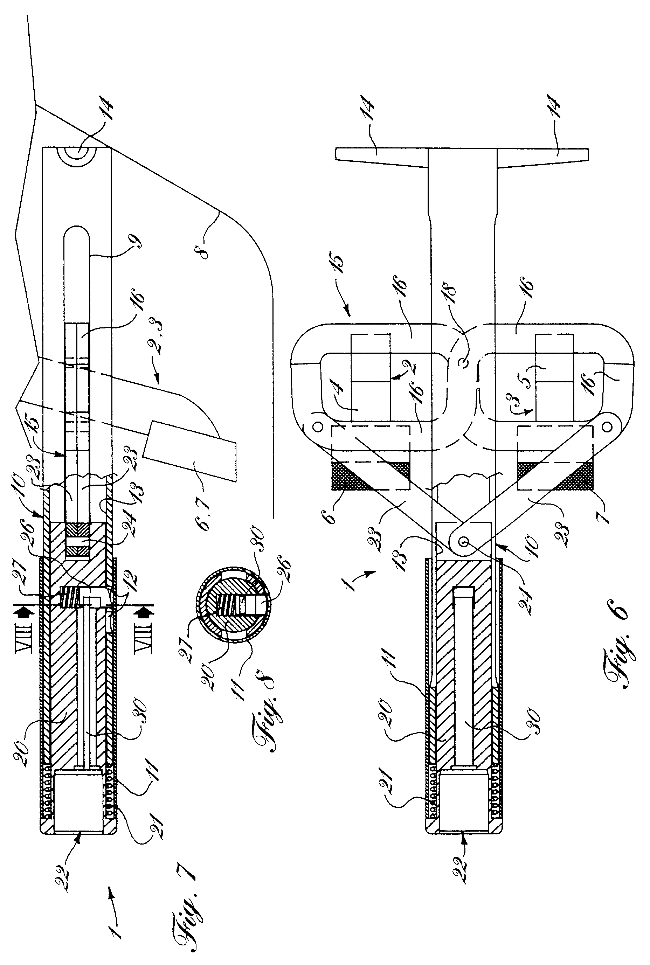

The rod 20 may be moved manually, through the sleeve 11, inside the recess 13 between an unlocked position, in which it is held by the action of the spring 21, as shown in Figs. 3, 4 and 5 and a locked position, in which it is held by the engagement of the bolt 26 with an opening 12, as shown in Figs. 6, 7 and 8.

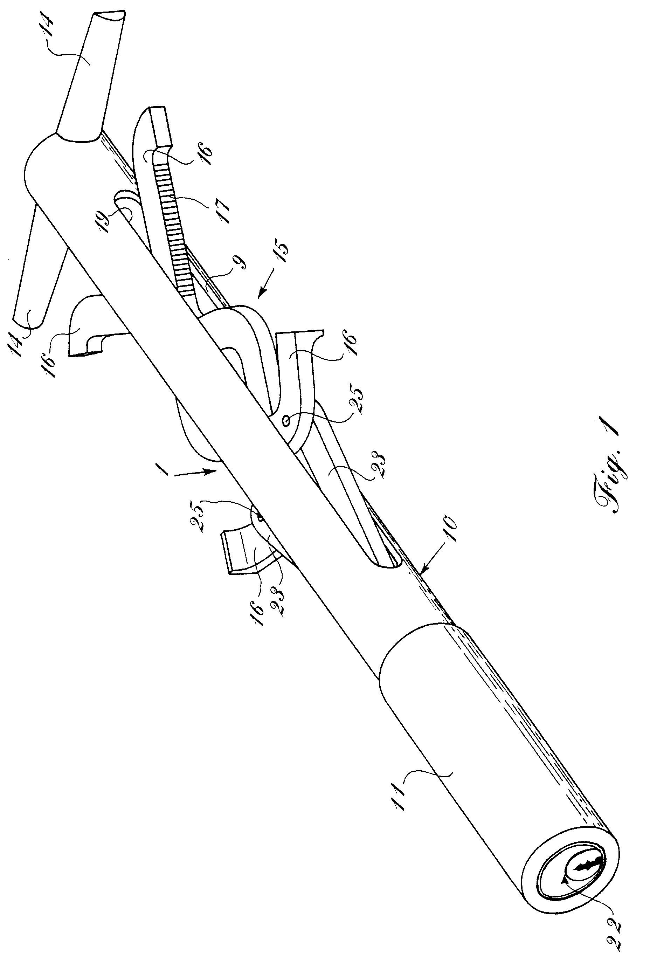

When the anti-theft device is in the non-operational condition, as shown in Figs. 1, 3 and 4, the lock 22 is open, the sleeve 11 is back and the spring 21 pushes the rod 20 in the unlocked position. In turn the rod 20, through the levers 23, holds the claws 16 of the double callipers 15 so that they are open and close to the bar 10, partially superposed and arranged inside the slot 9.

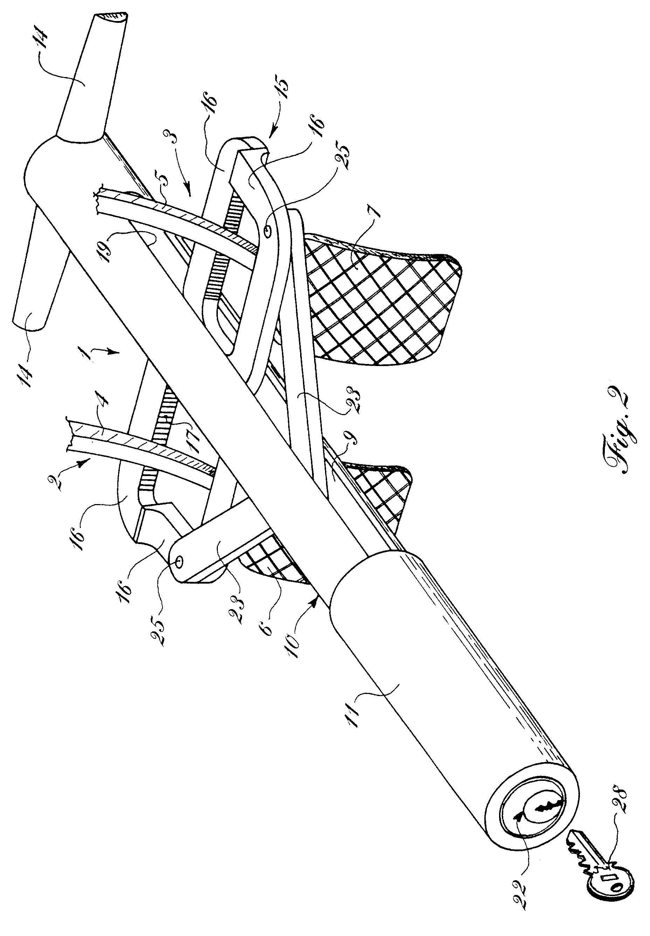

To place the anti-theft device in the operational condition, one proceeds by positioning the bar 10 between the pedals 2 and 3 of the clutch and of the brake, with the feet 14 on the floor 8. Holding the bar 10 with one hand and pushing the sleeve 11 toward the bar 10, the rod 20 slides in the recess 13 and reaches the locked position, so that the claws 16 are caused by the levers 23 to rotate on the pivot 18 and to close over the levers 4 and 5 of the pedals 2 and 3. With this operation, the bolt 26 engages in an opening 12 of the bar 10, as shown in Figs. 7 and 8, and rod 20 and claws 16 of the double callipers 15 are clamped in the closed position. In this position they keep the levers 4 and 5 of the pedals 2 and 3 integral with one another and raised over the floor 8, as shown in Figs. 2 and 5.

In this condition the anti-theft device 1 prevents the movement of the pedals 3 and 4 and makes it impossible to operate the clutch and brake of the motor vehicle.

To unclamp the pedals 3 and 4, it is necessary to reopen the lock 22 with the key 28, so that the bolt 26 disengages from the opening 12, the rod 20, under the action of the spring 21, returns the claws 16 to the unlocked position, with the sleeve 11 back, and the anti-theft device 1 can be removed.

Due to the reduced size, the anti-theft device 1 can be stored in any storage box in the motor vehicle, for example in the glove compartment or in a pocket of a door.

It is clear from the above description that with a few and simple manual operations, through the abovementioned support bar 10, operating rod 20 and lock 22, the anti-theft device according to the invention can be positioned in engagement with the pedals 2 and 3 and disengaged from them.

## Claims

1. Anti-theft device (1) for motor vehicles, capable of clamping brake and clutch pedals (2, 3), comprising clamp means capable of engaging with said pedals (2, 3), a supporting bar (10) holding said clamp means, at least one operating rod (20), operatively connected to said clamp means mounted movable in said bar (10) so that it may be moved between an unlocked position in which it operates the opening of said clamp means and a locked position in which it operates the closing of said clamp means, elastic return means (21) and lock means being operatively connected to said operating rod (20), characterised in that said clamp means (15) are calliper means and are capable of holding said rod (20) in said unlocked position, said lock means being suitable for locking said rod (20) with respect to said bar (10) in said locked position and in that said calliper means (15) being formed by two substantially S-shaped claws (16) hinged one to the other and in said supporting bar (10), so as to constitute a double callipers, and said operating rod (20) being mounted in said bar (10) slidable between said two positions, to determine the opening and the closing of the said calliper means (15).

2. Anti-theft device (1) according to claim 1, characterized in that to said rod (20) there are hinged, by means of a pivot (24), two levers (23), in turn hinged to said claws (16) by means of pivots (25).

3. Anti-theft device (1) according to claim 1, characterized in that said rod (20) is mounted slidable between said two positions inside a recess (13) of said bar (10) and a sleeve (11), mounted slidable on said bar (10), is fastened to said rod (20), with the interposition of said elastic means (21).

4. Anti-theft device (1) according to claim 1, characterized in that said supporting bar (10) is provided with supporting feet (14).

## Patentansprüche

1. Diebstahlschutzvorrichtung (1) für Kraftfahrzeuge, geeignet zum Blockieren von Brems- und Kupplungspedalen (2, 3), Blockiermittel enthaltend, die geeignet sind, mit den genannten Pedalen (2, 3) in Eingriff zu stehen, und eine Trägerstange (10) zum Halten der genannten Blockiermittel, Wenigstens einen Betätigungsstab (20), der mit den besagten Blockiermitteln in Wirkverbindung steht und bewegbar in der genannten Stange (10) derart montiert ist, daß er bewegt werden kann zwischen einer entsperrten Stellung, in welcher er das Öffnen der genannten Blockiermittel bewirkt, und einer Sperrstellung, in welcher er das Verschließen der genannten Blockiermittel bewirkt, sowie Rückholfedermittel (21) und Verschlußmittel, die mit dem genannten Betätigungsstab (20) in Wirkverbindung stehen, dadurch gekennzeichnet, daß die genannten Blockiermittel (15) zangenförmige Mittel sind und geeignet sind, den genannten Stab (20) in der genannten entsperrten Stellung zu halten, wobei die genannten Verschlußmittel geeignet sind, den genannten Stab (20) in Bezug auf die genannte Stange (10) in der genannten Sperrstellung festzuklemmen, und daß die genannten zangenförmigen Mittel (15) aus zwei im wesentlichen S-förmigen Greifhaken (16) bestehen, die miteinander gelenkartig und in der genannten Stange (10) derart verbunden sind, daß sie eine zweifach wirkende Zange bilden, und der genannte Betätigungsstab (20) in der genannten Stange (10) zwischen den genannten zwei Stellungen verschiebbar montiert ist, um das Öffnen und Schließen der genannten zangenförmigen Mittel (15) zu bewirken.

2. Diebstahlschutzvorrichtung (1) nach Anspruch 1, dadurch gekennzeichnet, daß zwei Hebel (23) mit dem genannten Stab (20) drehbar über einen Drehzapfen (24) verbunden sind, die ihrerseits mit den genannten Greifhaken (16) über Drehzapfen (25) drehbar verbunden sind.

3. Diebstahlschutzvorrichtung (1) nach Anspruch 1, dadurch gekennzeichnet, daß der genannte Stab (20) verschiebbar zwischen den genannten zwei Stellungen innerhalb einer Ausnehmung (13) der genannten Stange (10) montiert ist, und eine Hülse (11), die verschiebbar auf der genannten Stange (10) montiert ist, an dem genannten Stab (20) befestigt ist unter Zwischenschaltung der genannten Federmittel (21).

4. Diebstahlschutzvorrichtung (1) nach Anspruch 1, dadurch gekennzeichnet, daß die genannte Trägerstange (10) mit Stützfüßen (14) versehen ist.

## Revendications

1. Dispositif anti-vol (1) pour véhicules automobiles, en mesure de bloquer les pédales de frein et d'embrayage (2, 3), comprenant des moyens de serrage susceptibles de s'engager avec lesdites pédales (2, 3), une barre de support (10) portant lesdits moyens de serrage, au moins une tige de manoeuvre (20), reliée de façon opératoire auxdits moyens de serrage et montée mobile dans ladite barre (10), de sorte qu'elle peut être déplacée entre une position de déverrouillage dans laquelle elle commande l'ouverture desdits moyens de serrage et une position de verrouillage dans laquelle elle commande la fermeture desdits moyens de serrage, des moyens élastiques de rappel (21) et des moyens formant serrure étant reliés de manière opératoire à ladite tige de manoeuvre (20),
caractérisé en ce que lesdits moyens de serrage (15) sont des moyens à étrier et son capables de retenir ladite tige (20) à ladite position de déverrouillage, lesdits moyens de serrage étant adaptés à bloquer ladite tige (20) par rapport à ladite barre (10) à ladite position de verrouillage, et en ce que lesdits moyens à étrier (15) sont formés de deux mâchoires (16) sensiblement en forme de "S", articulées l'une sur l'autre et sur ladite barre de support (10), de manière à réaliser un étrier double, et que ladite tige de manoeuvre (20) est montée dans ladite barre (10) de façon coulissante entre lesdites deux positions, en vue de causer l'ouverture et la fermeture desdits moyens à étrier (15).

2. Dispositif anti-vol (1) selon la revendication 1, caractérisé en ce que deux leviers (23) sont articulées sur ladite tige (20) au moyen d'un pivot (24), ces leviers étant également articulés sur lesdites mâchoires (16) par des pivots (25).

3. Dispositif anti-vol (1) selon la revendication 1, caractérisé en ce que ladite tige (20) est montée coulissante entre lesdites deux positions à l'intérieur d'une rainure (13) de ladite barre (10) et qu'un fourreau (11) monté coulissant sur ladite barre (10) est fixé à ladite tige (20), par l'interposition desdits moyens élastiques (21).

4. Dispositif anti-volt (1) selon la revendication 1, caractérisé en ce que ladite barre de support (10) est pourvue de pieds d'appui (14).
